# EUROPEAN PATENT APPLICATION

(11) **EP 4 672 020 A1**
(43) Date of publication of application: **31.12.2025**
(21) Application number: 24759584.6
(22) Date of filing: 07.02.2024
(51) Int. Cl.: G06F 16/242

(54) **CONTENT SEARCH METHOD AND APPARATUS, DEVICE, COMPUTER READABLE STORAGE MEDIUM, AND PRODUCT**

(30) Priority: 20.02.2023 CN 202310158737
(71) Applicant: Beijing Zitiao Network Technology Co., Ltd., Beijing 100190 (CN)
(72) Inventor: WANG, Shengru, Beijing 100028 (CN)
(74) Representative: Isarpatent
(86) International application number: PCT/CN2024/076587
(87) International publication number: WO 2024/174907

(57) **Abstract**

Embodiments of the present disclosure provide a content search method and apparatus, a device, a computer readable storage medium, and a product. The method comprises: in response to a search operation triggered by a user on the basis of a preset search control, acquiring a search field generated by the user; according to the search field, searching a target data table for at least one search result matched with the search field, wherein the target data table comprises special effect associated contents corresponding to a plurality of pieces of category information; and respectively determining category information of the at least one search result, and displaying the at least one search result according to the category information. According to the embodiments of the present disclosure, the search efficiency of special effect associated contents is improved. **In** addition, by displaying the at least one search result according to the category information, a user can more intuitively view the search results corresponding to different category information, thereby improving the user experience.

## Description

This application claims priority to Chinese Patent Application No. 202310158737.5, filed on February 20, 2023, the disclosure of which is incorporated herein by reference in its entirety.

### TECHNICAL FIELD

Embodiments of the present disclosure relate to a content search method and apparatus, a device, a computer-readable storage medium, and a product.

### BACKGROUND

At present, different effects are available for users in lots of software products. Due to their large quantity, effect-associated contents of different types are typically stored separately, according to the categories, in databases that correspond to different categories.

Given the current modes of storage, when a user searches for effect-associated contents, the content in a specific database can generally be searched only based on keywords entered by this user. However, if the user needs to search for multiple different types of effect-associated contents at the same time, multiple search operations will be required, leading to cumbersome searching processes, low searching efficiency, and unsatisfactory user experience.

### SUMMARY

Embodiments of the present disclosure relate to a content search method and apparatus, a device, a computer-readable storage medium, and a product.

In a first aspect, an embodiment of the present disclosure provides a content search method, including:
acquiring a search field generated by a user in response to a search operation triggered by the user based on a preset search control;
searching a target data table for at least one search result matched with the search field according to the search field, where the target data table includes effect-associated contents corresponding to a plurality of pieces of type information; and
determining the type information to which the at least one search result belongs, respectively, and displaying the at least one search result according to the type information.

In a second aspect, an embodiment of the present disclosure provides a content search apparatus, including:
an acquiring module, configured to acquire a search field generated by a user in response to a search operation triggered by the user based on a preset search control;
a searching module, configured to search a target data table for at least one search result matched with the search field according to the search field, where the target data table includes effect-associated contents corresponding to a plurality of pieces of type information; and
a displaying module, configured to determine the type information to which the at least one search result belongs, respectively, and display the at least one search result according to the type information.

In a third aspect, an embodiment of the present disclosure provides an electronic device, including a processor and a memory, where
the memory stores computer-executable instructions; and
the processor executes the computer-executable instructions stored in the memory to enable the processor to perform the content search method according to the first aspect and various possible designs of the first aspect.

In a fourth aspect, an embodiment of the present disclosure provides a computer-readable storage medium including computer-executable instructions stored therein, where the computer-executable instructions, when executed by a processor, are configured to implement the content search method according to the first aspect and various possible designs of the first aspect.

In a fifth aspect, an embodiment of the present disclosure provides a computer program product including a computer program, where the computer program, when executed by a processor, is configured to implement the content search method according to the first aspect and various possible designs of the first aspect.

### BRIEF DESCRIPTION OF DRAWINGS

In order to more clearly illustrate the technical solutions of the embodiments of the present disclosure, a brief description will be given below with reference to the accompanying drawings which are required to be used in the present embodiments. It is obvious that the drawings in the following description are some embodiments of the present disclosure, and it would have been obvious for a person of ordinary skill in the art to obtain other drawings according to these drawings without involving any inventive effort.
Fig. 1 is a schematic flowchart of a content search method according to an embodiment of the present disclosure;
Fig. 2 is a schematic diagram of a display interface according to an embodiment of the present disclosure;
Fig. 3 is a schematic diagram of a display interface according to an embodiment of the present disclosure;
Fig. 4 is a schematic flowchart of a content search method according to another embodiment of the present disclosure;
Fig. 5 is a schematic diagram of another display interface according to an embodiment of the present disclosure;
Fig. 6 is a schematic flowchart of a content search method according to another embodiment of the present disclosure;
Fig. 7 is a schematic structural diagram of a content search apparatus according to an embodiment of the present disclosure; and
Fig. 8 is a schematic structural diagram of an electronic device according to an embodiment of the present disclosure.

### DETAILED DESCRIPTION

In order to enable the objects, aspects, and advantages of the embodiments of the present disclosure to become more apparent, the technical solutions in the embodiments of the present disclosure will be described clearly and completely in connection with the accompanying drawings in the embodiments of the present disclosure. Apparently, the described embodiments are part of the embodiments of the present disclosure, rather than all of the embodiments. Based on the embodiments in the present disclosure, all other embodiments obtained by a person of ordinary skill in the art without inventive effort fall within the scope of protection of the present disclosure.

To solve the technical problems in existing content search operations such as cumbersome search processes and low search efficiency, provided in the present disclosure are a content search method and apparatus, a device, a computer-readable storage medium, and a product.

It should be noted that the content search method and apparatus, the device, the computer-readable storage medium and the product provided in the present disclosure may be applied in any content search scenario.

Currently, in the case of data storage, data is generally separately stored in different databases or data partitions in terms of data type. Therefore, when searching for data based on keywords entered by users, it is necessary to perform multiple search operations in different databases or data partitions, respectively, in order to achieve accurate searches for all types of data. Such a search process is often cumbersome and inefficient.

In the process of solving the above-mentioned technical problems, the inventor has found through research that it is possible to create a data table for content search in advance, according to a plurality of data sheets that store different types of data. This data table may include a field used to characterize the type to which data belongs (TYPE), a field used to describe the specific content of data (CONTENT), and a field used to uniquely identify each item of data (ITEM). Therefore, upon acquisition of a search field generated by the user, a search operation for all types of data can be done in this data table to obtain search results, and thus the efficiency of data search is improved.

In addition, to enable the user to view the content matched with the search field in the search result in a more intuitive way, the search field in the search result may also be displayed distinguishably. For example, a part of the content including the search field in the search result may be displayed in a display interface, with the search field in the search result being highlighted.

The system architecture on which the present disclosure is based at least includes a terminal device and a server, where a content search apparatus may be provided in the server. As a result, a content search operation can be performed on the basis of the search field generated by the user on the terminal device, and the search result can be sent to and displayed on the terminal device.

Alternatively, the system architecture on which the present disclosure is based may include a terminal device, where a content search apparatus may be provided in the terminal device. As a result, a content search operation can be performed on the basis of the search field generated by the user on the terminal device, and the search result can be displayed.

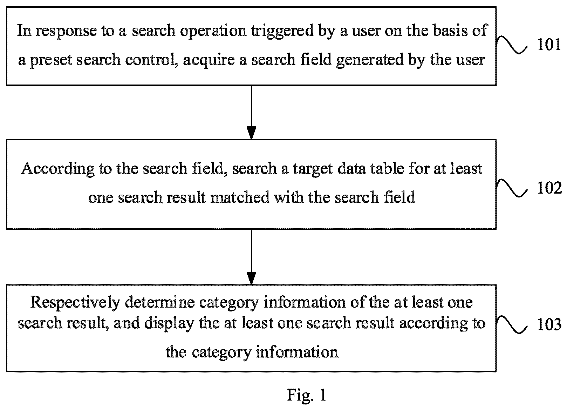

Fig. 1 is a schematic flowchart of a content search method according to the embodiment of the present disclosure. The method, as shown in Fig. 1, includes:
S101: acquiring a search field generated by a user in response to a search operation triggered by the user based on a preset search control.

The execution body in this embodiment is a content search apparatus that can be written in languages such as C/C++, Java, Shell, Python, etc. This content search apparatus may be coupled into a terminal device, or into a server that is communicatively connected with the terminal device, and this is not limited in the present disclosure.

In this implementation, a preset search control may be displayed in a front-end display interface. The user may generate a search field based on a trigger operation for this search control. By way of example, this search control may include a content input box and a trigger control. The user may input, into the input box, a search field required for content search, and perform content search through a trigger operation for the trigger control.

Optionally, the content search apparatus may acquire the search field generated by the user, in response to the search operation triggered by the user based on this search control.

S102: searching a target data table for at least one search result matched with the search field according to the search field, where the target data table includes effect-associated contents corresponding to a plurality of pieces of type information.

In this implementation, the type information of the effect-associated contents may be diverse. For example, the type information may include effect capability type, issue type, document type, case type, etc. Currently, different types of effect-associated contents are generally stored in tables that are corresponding to types. Therefore, in order to realize a rapid search for the effect-associated contents corresponding to all of the type information, a target data table may be created in advance based on the tables corresponding to types, where the target data table includes effect-associated contents corresponding to a plurality of pieces of type information.

This target data table may include a field used to characterize the type to which data belongs (TYPE), a field used to describe the specific content of data (CONTENT), and a field used to uniquely identify each piece of data (ITEM).

Therefore, upon acquisition of a search field generated by the user, a search operation may be performed in the target data table based on this search field, so as to obtain at least one search result matched with the search field in the target data table.

S103: determining the type information to which the at least one search result belongs, respectively, and displaying the at least one search result according to the type information.

In this implementation, the field used to characterize the type to which data belongs may be included in the target data table. As a result, upon acquisition of at least one search result, for each search result, the type information to which this search result belongs may be determined according to the TYPE field corresponding to this search result.

Further, to enable the user to view the search results corresponding to different type information in a more intuitive way, upon respective determination of the type information corresponding to various search results, the at least one search result may be displayed according to the type information.

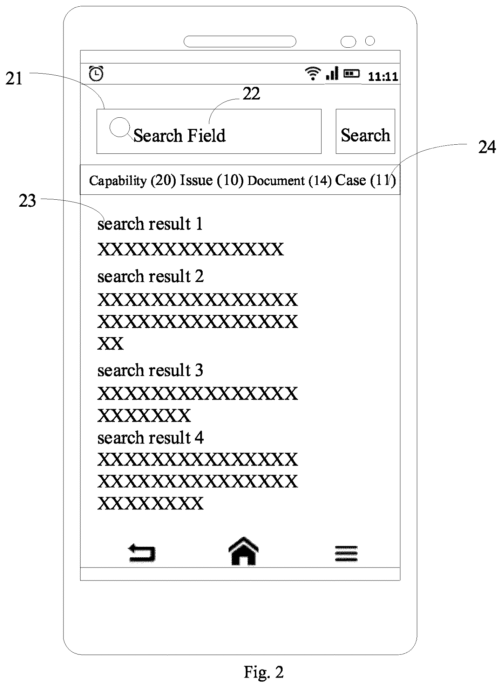

Fig. 2 is a schematic diagram of a display interface according to the embodiment of the present disclosure. As shown in Fig. 2, the user may generate a search field 22 based on a preset search control 21, and perform a search operation according to this search field 22 so as to obtain a search result 23. At least one search result is displayed in the display interface according to type information 24 to which the search result 23 belongs.

In the content search method according to this embodiment, a target data table that includes effect-associated contents corresponding to a plurality of pieces of type information is created in advance, so that upon acquisition of the search field generated by the user, the target data table can be searched for at least one search result corresponding to a plurality of pieces of type information matched with the search field. Thus, the efficiency in searching for effect-associated contents is raised. In addition, by displaying at least one search result according to the type information, the user can view the search results corresponding to different type information in a more intuitive way, thereby improving user experience.

Optionally, on the basis of any embodiment above, S 102 includes:
detecting whether at least one effect-associated content including the search field is present in the target data table; and
if so, determining the at least one effect-associated content including the search field as the at least one search result.

In this embodiment, upon acquisition of the search field generated by the user, it can be detected, according to this search field, whether at least one effect-associated content including the search field is present in the target data table. For each effect-associated content including the search field, this effect-associated content may be determined as the search result for the current search.

For example, this search field may be a field "Firework". Upon acquisition of the field "Firework", the target data table may be searched for the effect-associated contents including the field "Firework". At least one of the effect-associated contents including the field "Firework" is determined as the search result for the current search.

In the content search method according to this embodiment, the degree of matching between the search result and the search field can be raised by performing a content search operation in the target data table according to the search field.

Optionally, on the basis of any embodiment above, the step S 102 includes:
performing a segmentation operation on the search field according to a preset segmentation condition to obtain at least one target word segmentation;
detecting, for each target word segmentation, whether at least one effect-associated content including the target word segmentation is present in the target data table; and if so, determining the at least one effect-associated content including the target word segmentation as the at least one search result.

In this embodiment, the search field generated by the user may include a plurality of fields. Therefore, upon acquisition of the search field generated by the user, a segmentation operation may be performed on the search field according to a preset segmentation condition to obtain at least one target word segmentation. During content search based on the target word segmentation, the keywords of the effect-associated contents listed in the target data table may be segmented by space, and may be spliced into a regular expression. The effect-associated content may be determined as the search result as long as any word segmentation is matched with the target word segmentation. Optionally, for each target word segmentation, it is detected whether at least one effect-associated content including the target word segmentation is present in the target data table; and if so, the at least one effect-associated content including the target word segmentation is determined as the at least one search result.

In the content search method according to this embodiment, a segmentation operation is performed on the search field according to a preset segmentation condition to obtain at least one target word segmentation, and a content search operation is performed according to the target word segmentation. As a result, the accuracy of content search can be increased and the degree of matching between the search result and the search field can be raised.

Further, on the basis of any embodiment above, the step S103 includes:
displaying at least one piece of type information in a first display area preset in a display interface, the type information at least including a preset target type; and
displaying at least one search result corresponding to the preset target type in a second display area preset in the display interface.

In this embodiment, the type information of the effect-associated contents may be diverse. For example, the type information may include effect capability type, issue type, document type, case type, etc. To enable the user to understand the type information to which the search result belongs in a more intuitive way, the at least one search result may be displayed according to the type information.

Optionally, the display interface may include preset first and second display areas. The first display area is used to display at least one piece of type information. The second display area is used to display the search result corresponding to the type information.

Optionally, a target type may be preset, and distinguishably displayed in the first display area, e.g., it may be displayed in bold, or zoomed in. At least one search result corresponding to this target type is displayed in the second display area.

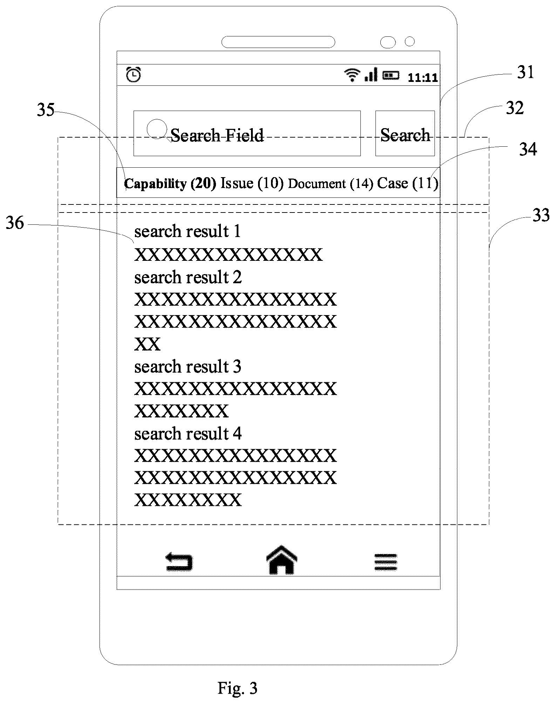

Fig. 3 is a schematic diagram of the display interface according to the embodiment of the present disclosure. As shown in Fig. 3, the display interface 31 may include a first display area 32 and a second display area 33. At least one piece of type information 34 may be displayed in the first display area 32, and at least one search result 36 corresponding to a preset target type 35 may be displayed in the second display area 33.

In the content search method according to this embodiment, at least one piece of type information is displayed in the first display area preset in the display interface, and the type information at least includes the preset target type. At least one search result corresponding to the preset target type is displayed in the second display area preset in the display interface. As a result, more diversified contents and more search results can be displayed in the display page.

Further, on the basis of any embodiment above, after displaying at least one search result corresponding to the preset target type in the second display area preset in the display interface, the following step is further included:
switching to display at least one search result corresponding to other type information in response to a switching operation triggered by the user.

In this embodiment, when browsing the search result, the user can perform, based on actual needs, a switching operation on the search result currently displayed in the display page.

Optionally, it is possible to switch to display at least one search result corresponding to other type information in response to the switching operation triggered by the user, where this switching operation includes, but is not limited to, an operation of swiping towards a preset direction, an operation of triggering for any type information, etc. For example, the target type may be the capability type, and in response to a left-swiping operation triggered by the user, it is possible to switch to display at least one search result corresponding to the issue type.

In the content search method according to this embodiment, it is possible to switch to display at least one search result corresponding to other type information according to the switching operation triggered by the user. As a result, the search result can be displayed in such a way as to better meet user's personalized needs, and user experience can be improved.

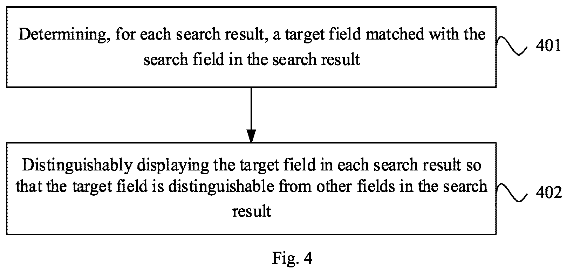

Fig. 4 is a schematic flowchart of the content search method according to another embodiment of the present disclosure. On the basis of any embodiment above, as shown in Fig. 4, the step S103 includes:
S401: determining, for each search result, a target field matched with the search field in the search result; and
S402: distinguishably displaying the target field in each search result so that the target field is distinguishable from other fields in the search result.

In this embodiment, the user can generate a search field based on actual needs, and perform a content search operation based on this search field in order to view the search result associated with the search field.

Optionally, to enable the user to view the content associated with the search field in the search result in a more intuitive way, upon acquisition of at least one search result and for each search result, the target field matched with the search field may be determined in the search result. The target field in each search result is distinguishably displayed such that the target field is distinguishable from other fields in the search result.

For example, "distinguishably displaying" includes, but is not limited to, highlighting, zooming in, displaying in bold, etc., and how the target field is distinguishably displayed is not defined in the present disclosure.

Further, on the basis of any embodiment above, before the step S103, the following step is further included:
performing a segmentation operation on the search result according to a preset segmentation condition, and identifying, in the search result, at least one target field matched with the search field;
adding a preset identifier character at a location, in the search result, associated with the at least one target field to obtain an identified search result; and
traversing the identified search result, and creating a distinguishable display list according to at least one target field associated with at least one identifier character corresponding to the identified search result.

The step S103 includes:
distinguishably displaying at least one target field in the distinguishable display list.

In this embodiment, to distinguishably display the target field matched with the search field in the search result, a segmentation operation may be performed on the search result according to a preset segmentation condition, and at least one target field matched with the search field in the search result is identified, where this segmentation condition includes, but is not limited to, segmentation by keyword, segmentation by space, segmentation by a preset number of fields, etc., and the way of segmentation is not limited in the present disclosure.

After at least one target field matched with the search field is acquired, a preset identifier character may be added at a location associated with the at least one target field in the search result, to obtain an identified search result, where this preset identifier character may be double quotation marks, etc. The identified search result is traversed, and a distinguishable display list is created according to at least one target field associated with at least one identifier character corresponding to the identified search result. As a result, at least one target field in the distinguishable display list may be distinguishably displayed in subsequent display processes.

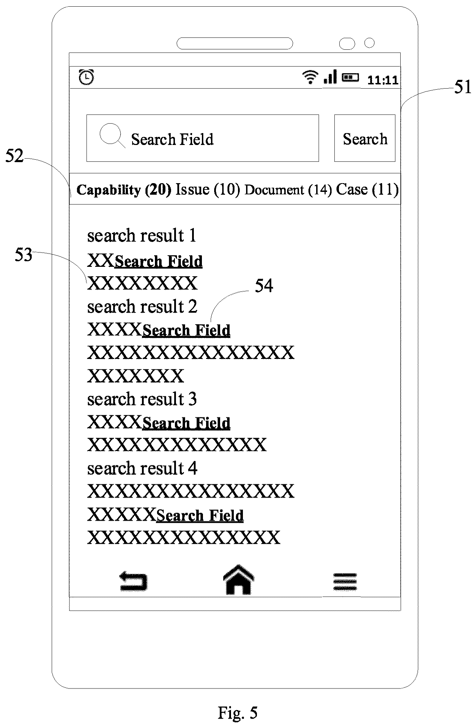

Fig. 5 is a schematic diagram of another display interface according to the embodiment of the present disclosure. As shown in Fig. 5, at least one search result 52 may be displayed in a display interface 51 according to type information 53 to which a search result 52 belongs. **In** each search result 52, a target field 54 matched with the search field may be distinguishably displayed.

In the content search method according to this embodiment, by distinguishably displaying the search field in the search result, the user can view the content matched with the search field in the search result in a more intuitive way and user experience can thus be improved.

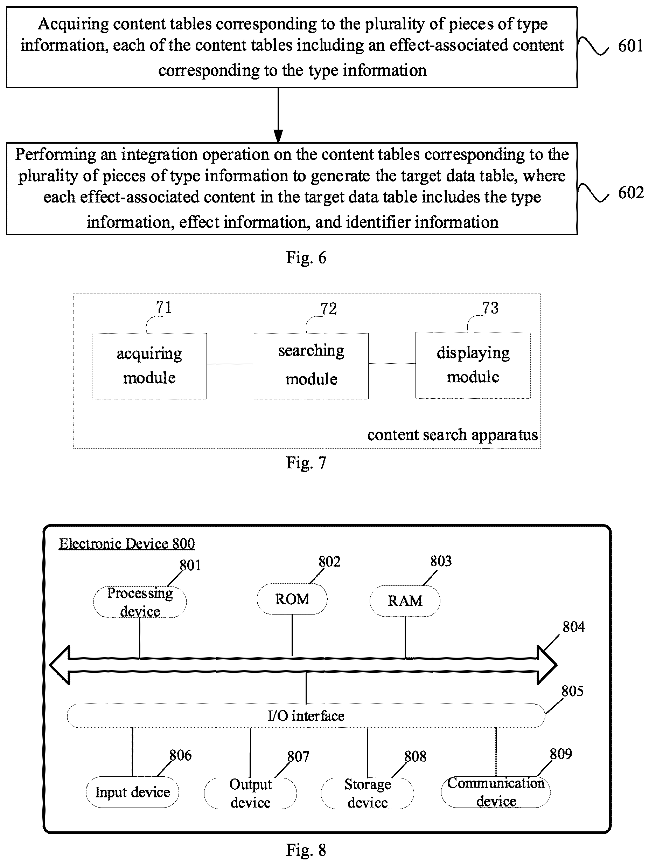

Fig. 6 is a schematic flowchart of the content search method according to another embodiment of the present disclosure. On the basis of any embodiment above and as shown in Fig. 6, prior to the step S102, the following step is further included:
S601: acquiring content tables corresponding to the plurality of pieces of type information, each of the content tables including an effect-associated content corresponding to the type information; and
S602: performing an integration operation on the content tables corresponding to the plurality of pieces of type information to generate the target data table, where each effect-associated content in the target data table includes the type information, effect information, and identifier information.

In this embodiment, there are generally multiple types of type information of the effect-associated contents in practical applications, so in order to perform a rapid search for the effect-associated contents corresponding to all of the type information, the target data table may be created in advance based on the content tables corresponding to types.

Optionally, the content tables corresponding to a plurality of pieces of type information may be acquired, and each content table includes the effect-associated content corresponding to the type information. An integration operation is performed on the content tables corresponding to a plurality of pieces of type information to generate the target data table, where each effect-associated content in the target data table includes the type information (TYPE), effect information (CONTENT), and identifier information (ITEM).

In the content search method according to this embodiment, before a content search based on search field is performed, a data table for content search is created in advance according to a plurality of data sheets that store different types of data, so that upon acquisition of the search field generated by the user, a search operation for all types of data can be realized in this data table, thereby increasing the efficiency of data search.

Further, on the basis of any embodiment above, subsequent to the step S602, the following step is further included:
detecting, for each content table, whether a changing operation occurs in the effect-associated content listed in the content table, where the changing operation includes any one or more of an adding operation, a deleting operation, and an updating operation;
if so, determining a target effect content on which the changing operation occurs; and
performing the updating operation on an associated content corresponding to the target effect content in the target data table, according to the target effect content.

In this embodiment, the effect-associated content may be updated, so in order to improve the accuracy of content search, the updating operation may be performed on the content in the target data table on the basis of the changing operation for the content tables corresponding to a plurality of pieces of type information.

Optionally, for each content table, it is detected whether a changing operation occurs in the effect-associated content listed in the content table, where the changing operation includes any one or more of an adding operation, a deleting operation, and an updating operation. If so, a target effect content, on which the changing operation occurs, in the content table may be determined. Based on this target effect content, the updating operation is performed on an associated content corresponding to the target effect content in the target data table.

By way of example, upon acquisition of the target effect content, it may be detected whether this target effect content is included in the target data table, according to the type information (TYPE) and the identifier information (ITEM) corresponding to this target effect content. If so, the updating operation may be performed on the associated content in the target data table, based on this target effect content. If not, this target effect content may be added into the target data table.

As a possible implementation, the target effect content may be spliced, in terms of fields, into a character string during updating, and this character string is stored in the effect information (CONTENT).

In the content search method according to this embodiment, upon detection of the changing operation for each content table, the updating operation is synchronously performed on the target data table so that more comprehensive and accurate search results can be obtained later based on this target data table, and the accuracy of content search is improved accordingly.

Fig. 7 is a schematic structural diagram of a content search apparatus according to the embodiment of the present disclosure. As shown in Fig. 7, this apparatus includes: an acquiring module 71, a searching module 72, and a displaying module 73. Among these modules, the acquiring module 71 is configured to acquire a search field generated by a user in response to a search operation triggered by the user based on a preset search control; the searching module 72 is configured to search for a target data table for at least one search result matched with the search field according to the search field, where the target data table includes effect-associated contents corresponding to a plurality of pieces of type information; and the displaying module 73 is configured to determine the type information to which the at least one search result belongs, respectively, and display the at least one search result according to the type information.

Further, on the basis of any embodiment above, the searching module is configured for detecting whether at least one effect-associated content including the search field is present in the target data table; and if so, determining the at least one effect-associated content including the search field as the at least one search result.

Further, on the basis of any embodiment above, the searching module is configured for performing a segmentation operation on the search field according to a preset segmentation condition to obtain at least one target word segmentation; detecting, for each target word segmentation, whether at least one effect-associated content including the target word segmentation is present in the target data table; and if so, determining the at least one effect-associated content including the target word segmentation as the at least one search result.

Further, on the basis of any embodiment above, the displaying module is configured for displaying at least one piece of type information in a first display area preset in a display interface, the type information at least including a preset target type; and displaying at least one search result corresponding to the preset target type in a second display area preset in the display interface.

Further, on the basis of any embodiment above, the displaying module is further configured for switching to display at least one search result corresponding to other type information in response to a switching operation triggered by the user.

Further, on the basis of any embodiment above, the displaying module is configured for determining, for each search result, a target field matched with the search field in the search result; and distinguishably displaying the target field in each search result so that the target field is distinguishable from other fields in the search result.

Further, on the basis of any embodiment above, the displaying module is further configured for performing a segmentation operation on the search result according to a preset segmentation condition, and identifying, in the search result, at least one target field matched with the search field; adding a preset identifier character at a location, in the search result, associated with the at least one target field, to obtain an identified search result; and traversing the identified search result, and creating a distinguishable display list according to at least one target field associated with at least one identifier character corresponding to the identified search result. The displaying module is configured for distinguishably displaying at least one target field in the distinguishable display list.

Further, on the basis of any embodiment above, the apparatus further includes: an acquiring module configured for acquiring content tables corresponding to the plurality of pieces of type information, where each of the content tables includes an effect-associated content corresponding to the type information; and an integrating module configured for performing an integration operation on the content tables corresponding to the plurality of pieces of type information to generate the target data table, where each effect-associated content in the target data table includes the type information, effect information, and identifier information.

Further, on the basis of any embodiment above, the apparatus further includes a detecting module configured for detecting, for each content table, whether a changing operation occurs in the effect-associated content listed in the content table, where the changing operation includes any one or more of an adding operation, a deleting operation and an updating operation. If it's detected that a changing operation occurs, a determining module is configured for determining a target effect content on which the changing operation occurs; and an updating module is configured for performing the updating operation on an associated content corresponding to the target effect content in the target data table, according to the target effect content.

The apparatus provided in this embodiment can be used to execute the technical solutions of the above-described method embodiments, with similar implementation principles and technical effects, which will not be repeated here.

In order to realize the above embodiments, an embodiment of the present disclosure further provides an electronic device, including a processor and a memory.

The memory stores computer-executable instructions.

The processor executes the computer-executable instructions stored in the memory so as to perform the content search method according to any of the above embodiments.

Fig. 8 is a schematic structural diagram of an electronic device according to the embodiment of the present disclosure. The electronic device 800 may be a terminal device or a server. The terminal device may include, but is not limited to, mobile terminals such as mobile phone, laptop, digital radio receiver, Personal Digital Assistant (PDA), Portable Android Device (PAD), Portable Media Player (PMP), vehicle-mounted terminal (e.g., vehicle-mounted navigation terminal), etc., and fixed terminals such as digital TV, desktop computer, etc. The electronic device shown in Fig. 8 is merely an example and should not impose any limitation on the functionality and scope of use of the embodiments of the present disclosure.

As shown in Fig. 8, the electronic device 800 may include a processing device (e.g., a central processing unit, a graphics processing unit, etc.) 801, which can perform various appropriate actions and processes according to a program stored in a Read-Only Memory (ROM) 802 or a program loaded into a Random-Access Memory (RAM) 803 from a storage device 808. In the RAM 803, various programs and data required for the operation of the electronic device 800 are also stored. The processing device 801, the ROM 802 and the RAM 803 are connected with each other via a bus 804. An input/output (I/O) interface 805 is also connected to the bus 804.

In general, the following devices can be connected to the I/O interface 805: an input device 806 including, for example, touch screen, touch pad, keyboard, mouse, camera, microphone, accelerometer, gyroscope, etc.; an output device 808 including, for example, liquid crystal display (LCD), speaker, vibrator, etc.; a storage device 808 including, for example, magnetic tape, hard disk, etc.; and a communication device 809. The communication device 809 may allow the electronic device 800 to communicate, wirelessly or in a wired manner, with other devices for data exchange. Although Fig. 8 shows the electronic device 800 having various devices, it should be understood that it is not required to implement or have all of the devices as shown. It is possible to alternatively implement or have more or fewer devices.

In particular, according to the embodiments of the present disclosure, the process described above with respect to the flowchart may be implemented as a computer software program. For example, an embodiment of the present disclosure further provides a computer program product including a computer program carried on a computer-readable medium, and the computer program contains program codes for executing the method shown in the flowchart. In such an embodiment, this computer program may be downloaded and installed from a network through a communication device 909, or installed from a storage device 908, or installed from a ROM 902. The computer program, when executed by a processing device 901, is configured to realize the above functions defined in the method of the embodiments of the present disclosure.

It should be noted that the computer-readable medium described above in the present disclosure may be a computer-readable signal medium, or a computer-readable storage medium, or any combination of the both. For example, the computer-readable storage medium may be, but not limited to, electric, magnetic, optical, electromagnetic, infrared, or semiconductor systems, apparatuses or devices, or any combination thereof. More specific examples of the computer-readable storage medium may include, but not limited to, electrical connection with one or more wires, portable computer disk, hard disk, random access memory (RAM), read-only memory (ROM), erasable programmable read-only memory (EPROM or flash), optical fiber, compact disk read-only memory (CD-ROM), optical storage device, magnetic storage device, or any appropriate combination of the above. In the present disclosure, the computer-readable storage medium may be any tangible medium containing or storing a program that may be used by or in combination with an instruction execution system, apparatus or device. In the present disclosure, the computer-readable signal medium may include a data signal propagated in baseband or as part of a carrier wave, and this data signal carries computer-readable program codes therein. This propagating data signal can take many forms, including but not limited to electromagnetic signal, optical signal, or any suitable combination of the above. The computer-readable signal medium may also be any computer-readable medium other than the computer-readable storage medium, and this computer-readable signal medium may send, communicate or transmit programs intended for use by or in combination with an instruction execution system, apparatus or device. Program codes contained on the computer-readable medium may be transmitted using any appropriate medium, including but not limited to electric wire, optical cable, RF (radio frequency), etc., or any suitable combination of the above.

In order to realize the above embodiments, an embodiment of the present disclosure further provides a computer-readable storage medium having computer-executable instructions stored therein, and the computer-executable instructions, when executed by a processor, are configured to realize the content search method of any of the above embodiments.

In order to realize the above embodiments, an embodiment of the present disclosure further provides a computer program product including a computer program, and the computer program, when executed by a processor, is configured to realize the content search method of any of the above embodiments.

The computer-readable medium described above may be contained in the above electronic device, and may also exist independently, without being incorporated into this electronic device.

The computer-readable medium described above carries one or more programs, and when the one or more programs described above are executed by this electronic device, this electronic device is caused to perform the method shown in the above embodiments.

Computer program codes for execution of the operations of the present disclosure may be written in one or more programming languages, or combinations thereof, and the above programming languages include object-oriented programming languages, such as Java, Smalltalk, C++, and also include conventional procedural programming languages, such as "C" language or similar programming languages. Program codes may be executed entirely on a user computer, partly on the user computer, as a standalone software package, partly on the user computer and partly on a remote computer, or entirely on the remote computer or a server. In a case where a remote computer is involved, the remote computer can be connected to the user computer through any type of network, including local area network (LAN) or wide area network (WAN), or to an external computer (e.g., using an Internet service provider for connection over Internet).

The flowcharts and block diagrams in the drawings illustrate the architectures, functions, and operations that may be realized in accordance with the systems, methods, and computer program products of various embodiments of the present disclosure. In this regard, each block in the flowchart or block diagram may represent part of a module, program segment, or code that contains one or more executable instructions for implementing specified logical functions. It should also be noted that in some alternative implementations, the functions indicated in the blocks may also occur in a different order than those indicated in the drawing. For example, two blocks that are shown in succession may actually be executed substantially in parallel, and may sometimes be executed in a reverse order, depending on the functions involved. It should also be noted that each block in the block diagram and/or flowchart, as well as combinations of the blocks in the block diagram and/or flowchart, may be implemented with a dedicated hardware-based system that performs specified functions or operations, or with a combination of specialized hardware and computer instructions.

The involved units that are described in the embodiments of the present disclosure may be realized by means of software or hardware. In a particular case, the name of a unit does not constitute a limitation to this unit itself, e.g., a first acquiring unit may also be described as "a unit that acquires at least two Internet Protocol addresses".

The functions described above in this document may be performed at least partially by one or more hardware logic components. For example, and without limitations, exemplary types of the hardware logic components that may be used include: field-programmable gate array (FPGA), application-specific integrated circuit (ASIC), application-specific standard product (ASSP), system-on-chip (SOC), complex programmable logic device (CPLD), etc.

In the context of the present disclosure, a machine-readable medium may be a tangible medium that may contain or store programs for use by or in combination with an instruction execution system, apparatus or device. The machine-readable medium may be either a machine-readable signal medium or a machine-readable storage medium. The machine-readable medium may include, but are not limited to, electronic, magnetic, optical, electromagnetic, infrared, or semiconductor systems, apparatuses, or devices, or any suitable combination of the above. More specific examples of the machine-readable storage medium would include electrical connection based on one or more wires, portable computer disk, hard disk, random access memory (RAM), read-only memory (ROM), erasable programmable read-only memory (EPROM or flash memory), optical fiber, compact disk read-only memory (CD-ROM), optical storage device, magnetic storage device, or any suitable combination of the above.

In a first aspect, according to one or more embodiments of the present disclosure, there is provided a content search method, including:
acquiring a search field generated by a user in response to a search operation triggered by the user based on a preset search control;
searching a target data table for at least one search result matched with the search field according to the search field, where the target data table includes effect-associated contents corresponding to a plurality of pieces of type information; and
determining the type information to which the at least one search result belongs, respectively, and displaying the at least one search result according to the type information.

According to one or more embodiments of the present disclosure, the searching a target data table for at least one search result matched with the search field according to the search field includes:
detecting whether at least one effect-associated content including the search field is present in the target data table; and
in response to detecting that at least one effect-associated content including the search field is present in the target data table, determining the at least one effect-associated content including the search field as the at least one search result.

According to one or more embodiments of the present disclosure, the searching a target data table for at least one search result matched with the search field according to the search field further includes:
performing a segmentation operation on the search field according to a preset segmentation condition to obtain at least one target word segmentation;
detecting, for each target word segmentation, whether at least one effect-associated content including the target word segmentation is present in the target data table; and in response to detecting that at least one effect-associated content including the target word segmentation is present in the target data table, determining the at least one effect-associated content including the target word segmentation as the at least one search result.

According to one or more embodiments of the present disclosure, the displaying the at least one search result according to the type information includes:
displaying at least one piece of type information in a first display area preset in a display interface, the type information at least including a preset target type; and
displaying at least one search result corresponding to the preset target type in a second display area preset in the display interface.

According to one or more embodiments of the present disclosure, the method, after the displaying at least one search result corresponding to the preset target type in a second display area preset in the display interface, further includes:
switching to display at least one search result corresponding to other type information in response to a switching operation triggered by the user.

According to one or more embodiments of the present disclosure, the displaying the at least one search result according to the type information includes:
determining, for each search result, a target field matched with the search field in the search result; and
distinguishably displaying the target field in each search result so that the target field is distinguishable from other fields in the search result.

According to one or more embodiments of the present disclosure, the method, before the distinguishably displaying the target field in each search result, further includes:
performing a segmentation operation on the search result according to a preset segmentation condition, and identifying, in the search result, at least one target field matched with the search field;
adding a preset identifier character at a location, in the search result, associated with the at least one target field, to obtain an identified search result; and
traversing the identified search result, and creating a distinguishable display list according to at least one target field associated with at least one identifier character corresponding to the identified search result;
the distinguishably displaying the target field in each search result includes:
   distinguishably displaying at least one target field in the distinguishable display list.

According to one or more embodiments of the present disclosure, the method, before the searching a target data table for at least one search result matched with the search field according to the search field, further includes:
acquiring content tables corresponding to the plurality of pieces of type information, each of the content tables including an effect-associated content corresponding to the type information; and
performing an integration operation on the content tables corresponding to the plurality of pieces of type information to generate the target data table, where each effect-associated content in the target data table includes the type information, effect information, and identifier information.

According to one or more embodiments of the present disclosure, the method, after the performing an integration operation on the content tables corresponding to the plurality of pieces of type information to generate the target data table, further includes:
detecting, for each of the content tables, whether a changing operation occurs in the effect-associated content listed in the content table, where the changing operation includes any one or more of an adding operation, a deleting operation, and an updating operation;
in response to detecting that a changing operation occurs in the effect-associated content listed in the content table, determining a changed target effect content; and
performing the updating operation on an associated content, in the target data table, corresponding to the target effect content according to the target effect content.

In a second aspect, according to one or more embodiments of the present disclosure, there is provided a content search apparatus, including:
an acquiring module, configured to acquire a search field generated by a user in response to a search operation triggered by the user based on a preset search control;
a searching module, configured to search a target data table for at least one search result matched with the search field according to the search field, where the target data table includes effect-associated contents corresponding to a plurality of pieces of type information; and
a displaying module, configured to determine the type information to which the at least one search result belongs, respectively, and display the at least one search result according to the type information.

According to one or more embodiments of the present disclosure, the searching module is configured for:
detecting whether at least one effect-associated content including the search field is present in the target data table; and
in response to detecting that at least one effect-associated content including the search field is present in the target data table, determining the at least one effect-associated content including the search field as the at least one search result.

According to one or more embodiments of the present disclosure, the searching module is configured for:
performing a segmentation operation on the search field according to a preset segmentation condition to obtain at least one target word segmentation;
detecting, for each target word segmentation, whether at least one effect-associated content including the target word segmentation is present in the target data table; and in response to detecting that at least one effect-associated content including the target word segmentation is present in the target data table, determining the at least one effect-associated content including the target word segmentation as the at least one search result.

According to one or more embodiments of the present disclosure, the displaying module is configured for:
displaying at least one piece of type information in a first display area preset in a display interface, where the type information at least includes a preset target type; and
displaying at least one search result corresponding to the preset target type in a second display area preset in the display interface.

According to one or more embodiments of the present disclosure, the displaying module is further configured for:
switching to display at least one search result corresponding to other type information in response to a switching operation triggered by the user.

According to one or more embodiments of the present disclosure, the displaying module is configured for:
determining, for each search result, a target field matched with the search field in the search result; and
distinguishably displaying the target field in each search result so that the target field is distinguishable from other fields in the search result.

According to one or more embodiments of the present disclosure, the displaying module is further configured for:
performing a segmentation operation on the search result according to a preset segmentation condition, and identifying, in the search result, at least one target field matched with the search field;
adding a preset identifier character at a location, in the search result, associated with the at least one target field, to obtain an identified search result; and
traversing the identified search result, and creating a distinguishable display list according to at least one target field associated with at least one identifier character corresponding to the identified search result;
the displaying module is configured for:
   distinguishably displaying at least one target field in the distinguishable display list.

According to one or more embodiments of the present disclosure, the apparatus further includes:
an acquiring module, configured for acquiring content tables corresponding to the plurality of pieces of type information, where each of the content tables includes an effect-associated content corresponding to the type information; and
an integrating module, configured for performing an integration operation on the content tables corresponding to the plurality of pieces of type information to generate the target data table, where each effect-associated content in the target data table includes the type information, effect information, and identifier information.

According to one or more embodiments of the present disclosure, the apparatus further includes:
a detecting module, configured for detecting, for each content table, whether a changing operation occurs in the effect-associated content listed in the content table, where the changing operation includes any one or more of an adding operation, a deleting operation and an updating operation;
a determining module, configured for determining a target effect content on which the changing operation occurs in response to detecting the changing operation; and
an updating module, configured for performing the updating operation on an associated content, in the target data table, corresponding to the target effect content according to the target effect content.

In a third aspect, according to one or more embodiments of the present disclosure, there is provided an electronic device, including at least one processor and a memory, where
the memory stores computer-executable instructions; and
the at least one processor executes the computer-executable instructions stored in the memory so as to perform the content search method according to the first aspect and various possible designs of the first aspect.

In a fourth aspect, according to one or more embodiments of the present disclosure, there is provided a computer-readable storage medium including computer-executable instructions stored therein, where the computer-executable instructions, when executed by a processor, are configured to implement the content search method according to the first aspect and various possible designs of the first aspect.

In a fifth aspect, according to one or more embodiments of the present disclosure, there is provided a computer program product including a computer program, where the computer program, when executed by a processor, is configured to implement the content search method according to the first aspect and various possible designs of the first aspect.

The above description merely refers to preferred embodiments of the present disclosure and the explanation of the applied technical principles. It should be understood by those skilled in the art that the disclosed scope involved in the present disclosure is not limited to the technical solutions formed by the specific combination of the above technical features, but also covers other technical solutions formed by any combination of the above technical features or their equivalent features without departing from the above disclosed concepts. For example, technical solutions formed by replacing above features with (but not limited to) technical features having similar functions disclosed in the present disclosure.

Although various operations are depicted in a specific order, it should not be construed as requiring these operations to be performed in the specific order as shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. **In** contrast, various features described in the context of a single embodiment may alternatively be implemented in a plurality of embodiments individually or in any suitable sub-combination.

Although the subject matter has been described in language specific to structural features and/or methodological logical acts, it should be understood that the subject matter defined in the appended claims is not necessarily limited to the specific features or acts described above. On the contrary, the specific features and actions described above are only exemplary forms of implementing the claims.

## Claims

1. A content search method, comprising:
acquiring a search field generated by a user in response to a search operation triggered by the user based on a preset search control;
searching a target data table for at least one search result matched with the search field according to the search field, wherein the target data table comprises effect-associated contents corresponding to a plurality of pieces of type information; and
determining the type information to which the at least one search result belongs, respectively, and displaying the at least one search result according to the type information.

2. The method according to claim 1, wherein the searching a target data table for at least one search result matched with the search field according to the search field comprises:
detecting whether at least one effect-associated content comprising the search field is present in the target data table; and
in response to detecting that at least one effect-associated content comprising the search field is present in the target data table, determining the at least one effect-associated content comprising the search field as the at least one search result.

3. The method according to claim 2, wherein the searching a target data table for at least one search result matched with the search field according to the search field further comprises:
performing a segmentation operation on the search field according to a preset segmentation condition to obtain at least one target word segmentation;
detecting, for each target word segmentation, whether at least one effect-associated content comprising the target word segmentation is present in the target data table; and in response to detecting that at least one effect-associated content comprising the target word segmentation is present in the target data table, determining the at least one effect-associated content comprising the target word segmentation as the at least one search result.

4. The method according to claim 1, wherein the displaying the at least one search result according to the type information comprises:
displaying at least one piece of type information in a first display area preset in a display interface, the type information at least comprising a preset target type; and
displaying at least one search result corresponding to the preset target type in a second display area preset in the display interface.

5. The method according to claim 4, wherein the method, after the displaying at least one search result corresponding to the preset target type in a second display area preset in the display interface, further comprises:
switching to display at least one search result corresponding to other type information in response to a switching operation triggered by the user.

6. The method according to claim 1, wherein the displaying the at least one search result according to the type information comprises:
determining, for each search result, a target field matched with the search field in the search result; and
distinguishably displaying the target field in each search result so that the target field is distinguishable from other fields in the search result.

7. The method according to claim 6, wherein the method, before the distinguishably displaying the target field in each search result, further comprises:
performing a segmentation operation on the search result according to a preset segmentation condition, and identifying, in the search result, at least one target field matched with the search field;
adding a preset identifier character at a location, in the search result, associated with the at least one target field, to obtain an identified search result; and
traversing the identified search result, and creating a distinguishable display list according to at least one target field associated with at least one identifier character corresponding to the identified search result;
wherein the distinguishably displaying the target field in each search result comprises: distinguishably displaying at least one target field in the distinguishable display list.

8. The method according to any one of claims 1 to 7, wherein the method, before the searching a target data table for at least one search result matched with the search field according to the search field, further comprises:
acquiring content tables corresponding to the plurality of pieces of type information, each of the content tables comprising an effect-associated content corresponding to the type information; and
performing an integration operation on the content tables corresponding to the plurality of pieces of type information to generate the target data table, wherein each effect-associated content in the target data table comprises the type information, effect information, and identifier information.

9. The method according to claim 8, wherein the method, after the performing an integration operation on the content tables corresponding to the plurality of pieces of type information to generate the target data table, further comprises:
detecting, for each of the content tables, whether a changing operation occurs in the effect-associated content listed in the content table, wherein the changing operation comprises any one or more of an adding operation, a deleting operation, and an updating operation;
in response to detecting that a changing operation occurs in the effect-associated content listed in the content table, determining a changed target effect content; and
performing the updating operation on an associated content, in the target data table, corresponding to the target effect content according to the target effect content.

10. A content search apparatus, comprising:
an acquiring module, configured to acquire a search field generated by a user in response to a search operation triggered by the user based on a preset search control;
a searching module, configured to search a target data table for at least one search result matched with the search field according to the search field, wherein the target data table comprises effect-associated contents corresponding to a plurality of pieces of type information; and
a displaying module, configured to determine the type information to which the at least one search result belongs, respectively, and display the at least one search result according to the type information.

11. An electronic device, comprising a processor and a memory, wherein
the memory stores computer-executable instructions; and
the processor executes the computer-executable instructions stored in the memory so as to perform the content search method according to any one of claims 1 to 9.

12. A computer-readable storage medium comprising computer-executable instructions stored therein, wherein the computer-executable instructions, when executed by a processor, are configured to realize the content search method according to any one of claims 1 to 9.

13. A computer program product comprising a computer program, wherein the computer program, when executed by a processor, is configured to realize the content search method according to any one of claims 1 to 9.
